# EUROPEAN PATENT SPECIFICATION

(11) **EP 2 572 863 B1**
(45) Date of publication and mention of the grant of the patent: **07.11.2018**
(21) Application number: 12184350.2
(22) Date of filing: 14.09.2012
(51) Int. Cl.: B29C 65/52, A41H 43/04, D06H 5/00, A41D 27/24, B29C 65/00, B29C 65/40, B29C 65/48

(54) **CLOTH BONDING APPARATUS**
VORRICHTUNG ZUM VERBINDEN VON STOFF
APPAREIL DE LIAISON DE TISSUS

(30) Priority: 22.09.2011 JP 2011207472
(43) Date of publication of application: 27.03.2013
(73) Proprietor: Brother Kogyo Kabushiki Kaisha, Nagoya-shi, Aichi 467-8561 (JP)
(72) Inventor: Yamaura, Hiroki, Nagoya-shi, Aichi 467-8562 (JP); Nishimura, Kazuto, Nagoya-shi, Aichi 467-8562 (JP); Minagawa, Yuichiro, Nagoya-shi, Aichi 467-8562 (JP); Nemoto, Yoshimitsu, Nagoya-shi, Aichi 467-8562 (JP); Umeda, Kazutoshi, Nagoya-shi, Aichi 467-8562 (JP); Iwakoshi, Hiroyasu, Nagoya-shi, Aichi 467-8562 (JP)
(74) Representative: Prüfer & Partner mbB Patentanwälte · Rechtsanwälte

(56) References cited:
- EP-A2- 2 366 297

## Description

### BACKGROUND

The present invention relates to a cloth bonding apparatus that bonds a cloth to a cloth using a thermal melting adhesive.

A cloth bonding apparatus bonds a cloth to a cloth with an adhesive instead of sewing the cloths together with a thread. For example, an apparatus disclosed in JP 2010-222140 A directly discharges a liquid adhesive to a cloth from a nozzle, and transports the cloth to which the adhesive is attached. After another cloth is aligned with and placed on the upper side of the cloth to which the adhesive is attached, a pressing portion of the apparatus pressurizes the cloths from an outer surface to bond the cloths. With the apparatus, unevenness of a thread does not occur, as occurs on a cloth surface during sewing. As a result, the cloth surface after processing is smooth. Therefore, the cloth bonding apparatus can produce clothing etc. that causes no discomfort when the clothing etc. is worn. A similar cloth bonding apparatus is known from EP 2 366 297 A2 which discloses the features of the preamble of claim 1.

### SUMMARY

When the cloth bonding apparatus bonds high stretch cloths, resistance occurs in the cloth that is transported by a pressure bonding roller, due to friction between the nozzle and a lower belt and due to viscosity of the adhesive. As a result, the lower cloth is stretched. After the pressure bonding roller is stopped, the stretched lower cloth compresses in a feed direction and is displaced from below the nozzle. Therefore, when the cloth bonding apparatus is operated again, the cloth bonding apparatus is likely to cause the cloth to have a non-applied portion on which the adhesive is not applied. An object of the present invention is to provide a cloth bonding apparatus that is unlikely to cause a cloth to have a non-applied portion on which the adhesive is not applied when the cloth bonding apparatus is stopped and operated again.

A cloth bonding apparatus according to an aspect of the present invention includes a nozzle, a feed portion, a discharge control portion, a pressing portion, and a drive control portion. The nozzle includes a discharge opening through which an adhesive is dischargeable between a first cloth and a second cloth arranged to face each other. The feed portion is adapted to feed the first cloth in a first direction with respect to the nozzle. The discharge control portion starts and stops processing
that discharges the adhesive from the discharge opening. The pressing portion is located on the first direction side with respect to the nozzle, is adapted to press the first cloth and the second cloth to which the adhesive discharged from the discharge opening is attached, and is adapted to feed the second cloth in the first direction. The drive control portion, when the discharge control portion stops the processing that discharges the adhesive, causes the feed portion and the pressing portion, to perform a reverse operation that returns the first cloth and the second cloth by a predetermined distance in a second direction that is opposite to the first direction without feeding the first cloth and the second cloth in the first direction. According to this configuration, the cloth bonding apparatus is unlikely to cause a cloth to have a non-applied portion on which the adhesive is not applied when the cloth bonding apparatus is stopped and operated again.

The drive control portion may also cause the feed portion and the pressing portion to feed the first cloth and the second cloth in the second direction at a predetermined speed. The first cloth and the second cloth can be fed in the second direction at a predetermined speed in accordance with the thickness and properties of the cloth.

The cloth bonding apparatus may further include a distance setting portion that sets the predetermined distance. The operator can set the predetermined distance in accordance with the thickness and properties of the cloth.

The cloth bonding apparatus may further include a speed setting portion that sets the predetermined speed. The operator can set the predetermined speed in accordance with the thickness and properties of the cloth.

The cloth bonding apparatus may further include a mode setting portion that sets whether to perform the reverse operation. The operator can set whether to perform the reverse operation.

### BRIEF DESCRIPTION OF THE DRAWINGS

Exemplary embodiments of the present disclosure will be described below in detail with reference to the accompanying drawings in which:
FIG. 1 is a perspective view of an entire cloth bonding apparatus 1;
FIG. 2 is a perspective view of a bonding device 2;
FIG. 3 is a front view of the bonding device 2;
FIG. 4 is a left side view of the bonding device 2;
FIG. 5 is a perspective view of an internal configuration of the bonding device 2;
FIG. 6 is a partially enlarged cross-sectional view of a storage chamber 18, a pump casing 14 and a support portion 16;
FIG. 7 is a perspective view showing the vicinity of a lower transport portion 37;
FIG. 8 is a left side view showing the vicinity of the lower transport portion 37;
FIG. 9 is a front view showing the vicinity of the lower transport portion 37;
FIG. 10 is a left side view showing the vicinity of the lower transport portion 37 in a first position;
FIG. 11 is a left side view showing the vicinity of the lower transport portion 37 in a second position;
FIG. 12 is a block diagram showing an electrical configuration of the cloth bonding apparatus 1;
FIG. 13 is a flowchart of parameter setting processing;
FIG. 14 is a flowchart of reverse operation processing;
FIG. 15 is a diagram showing driving directions of a first roller 22 and a belt 27 during processing in which an adhesive is applied to a cloth and bonding is performed;
FIG. 16 is a diagram showing a state in which the first roller 22 and the belt 27 are stopped when the reverse operation is not performed; and
FIG. 17 is a diagram showing driving directions of the first roller 22 and the belt 27 when the reverse operation is performed.

### DETAILED DESCRIPTION

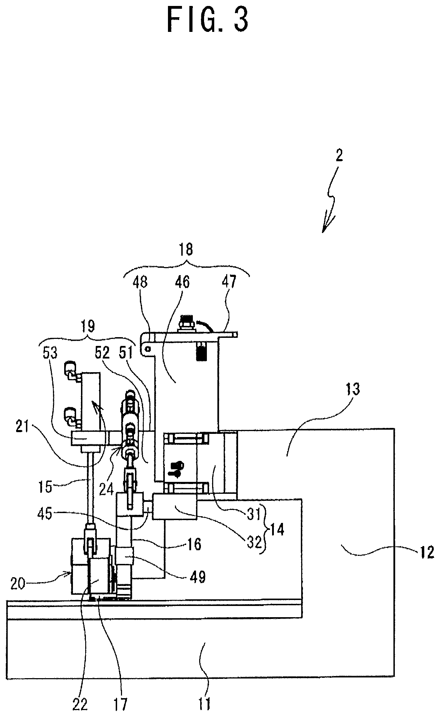

An embodiment of the present invention will be explained with reference to the drawings. The upper side, the lower side, the right side, the left side, the front surface side and the back surface side of FIG. 3 respectively correspond to the upper side, the lower side, the right side, the left side, the front side and the rear side of a bonding device 2.

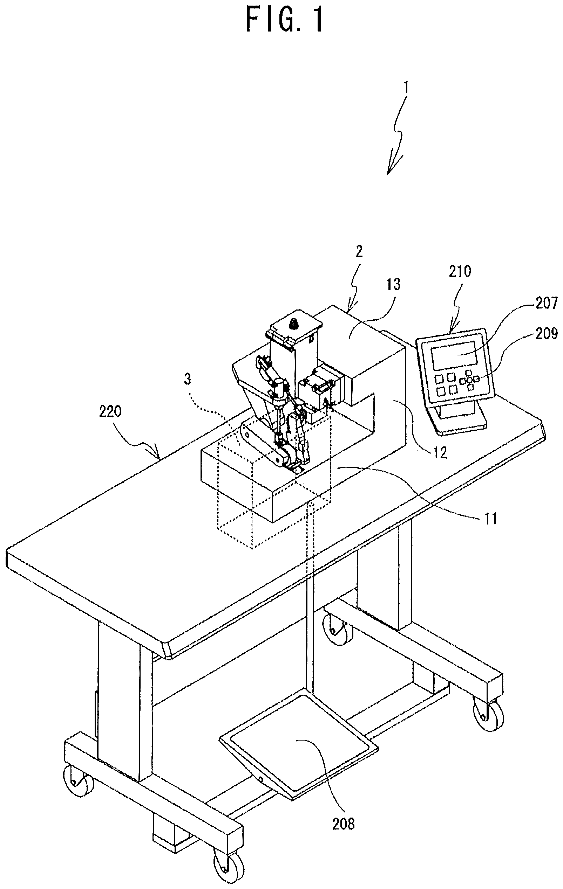

An overall configuration of a cloth bonding apparatus 1 will be explained with reference to FIG. 1. The cloth bonding apparatus 1 is provided with the bonding device 2, a control box 3 and an operation panel 210. The bonding device 2 attaches an adhesive between two layers of cloth that are arranged to face each other, and transports the two layers of cloth while pressing them. The bonding device 2 is fixed to the upper side of a table 220. The table 220 is provided with the operation panel 210 on the right side of the bonding device 2. The operation panel 210 is provided with a liquid crystal display portion 207 and a plurality of keys 209. The liquid crystal display portion 207 displays a variety of information. The keys 209 are an operation portion used to perform various types of inputs. An operator sets various types of operations of the bonding device 2 by operating the keys 209 while looking at the liquid crystal display portion 207. The table 220 is provided with a pedal 208 used to adjust a transport speed of the cloth, and the pedal 208 is located below the table 220. The control box 3 is provided above the pedal 208 and on an underside surface of the table 220. The control box 3 stores a control board that controls the entire cloth bonding apparatus 1.

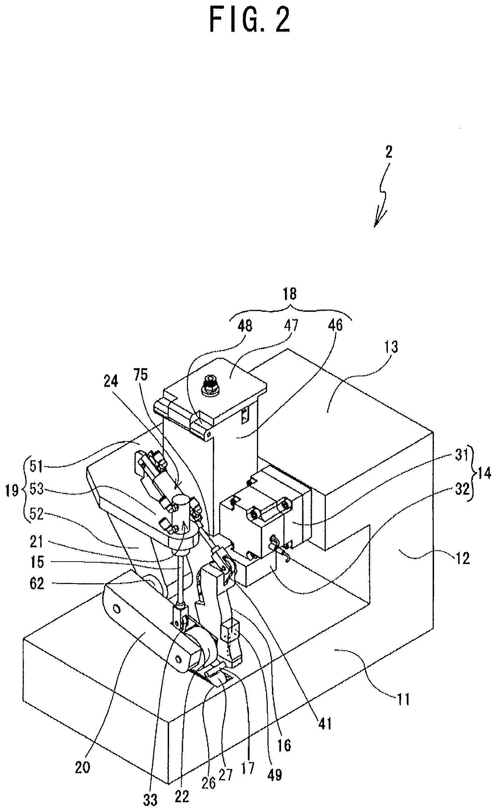

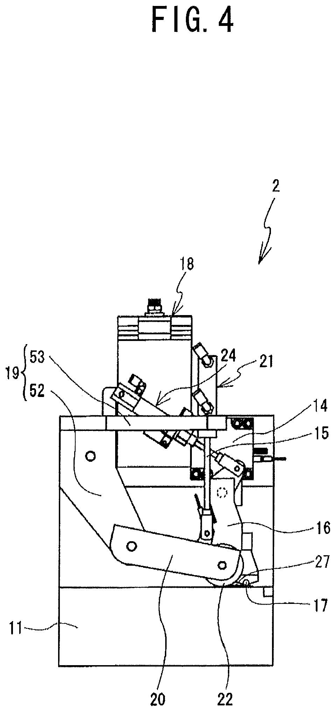

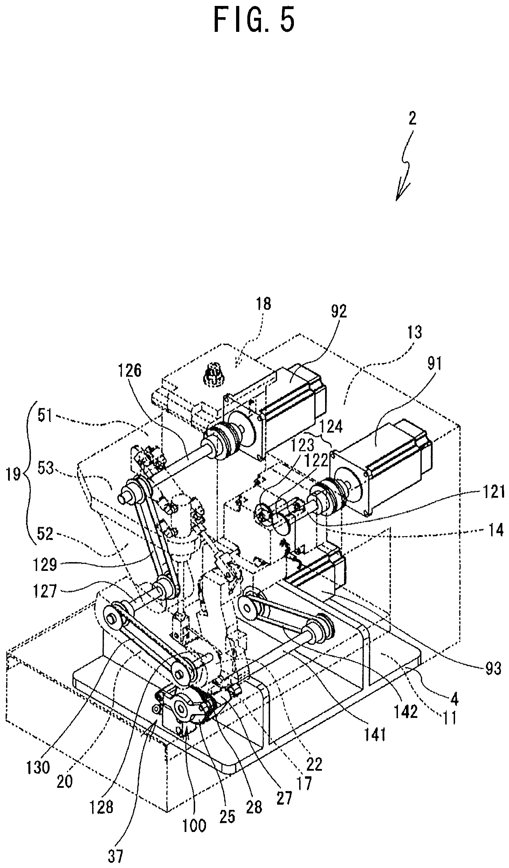

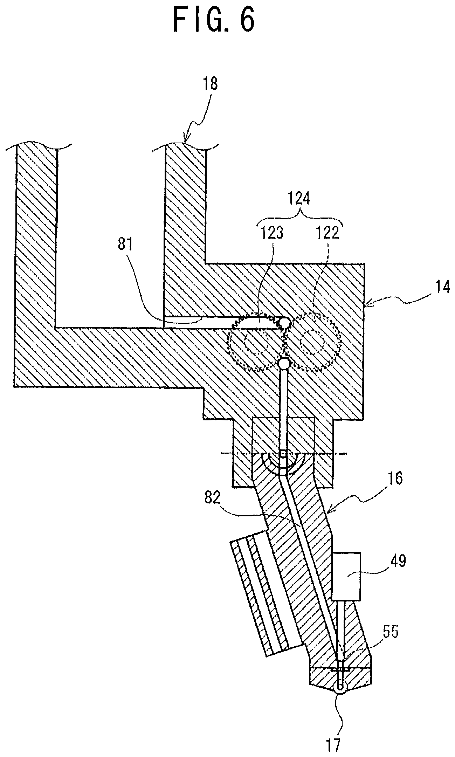

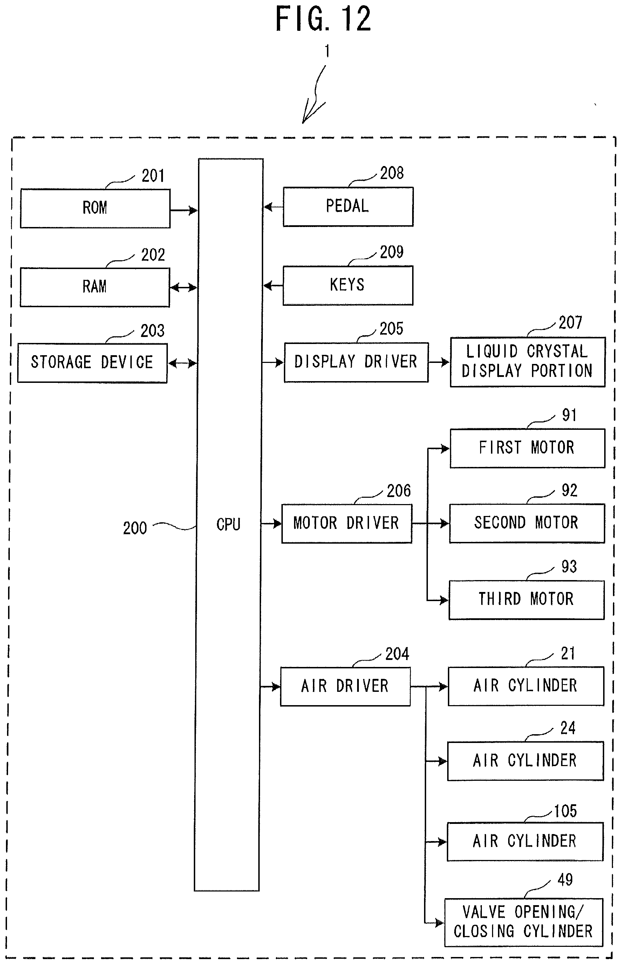

A configuration of the bonding device 2 will be explained with reference to FIG, 2 to FIG. 4. The bonding device 2 is provided with a bed 11, a pillar 12 and an arm 13. The bed 11 has a substantially cubic shape. The pillar 12 extends vertically from the right end of the bed 11. The arm 13 is connected to the upper end of the pillar 12, and projects toward the left from a left side face of the pillar 12. A left end portion of the arm 13 supports a pump casing 14, a storage chamber 18 and a beam portion 19, in that order starting from the front. As shown in FIG. 2 and FIG. 3, the pump casing 14 is provided with a first pump casing 31 and a second pump casing 32. The first pump casing 31 has a substantially cubic shape, and is fixed to a left side face of the arm 13. A gear pump 124 (refer to FIG. 5) and the like are provided inside the first pump casing 31. The gear pump 124 supplies an appropriate amount of the adhesive to a nozzle 17 at a high level of accuracy. The second pump casing 32 is a member having a substantially cubic shape, and extends downward from a lower left end face of the first pump casing 31. A shaft portion 45 (refer to FIG. 3) is provided on the left side of the second pump casing 32. The shaft portion 45 is connected to the right side of the upper end of a support portion 16 and swingably supports the support portion 16. The pump casing 14 is provided with a supply passage 81 (refer to FIG. 6). The supply passage 81 feeds the adhesive from the storage chamber 18 to the gear pump 124. The support portion 16 has a substantially cubic shape. A slight gap is provided between the lower end of the support portion 16 and the bed 11. A supply passage 82 (refer to FIG. 6) is provided inside the support portion 16. The supply passage 82 feeds the adhesive from the pump casing 14 to the nozzle 17. The nozzle 17 is provided on a lower end portion of the support portion 16. The nozzle 17 extends from the support portion 16 to the left side along the cloth. A drive transmission portion 41 is provided on an upper end portion of the support portion 16. The drive transmission portion 41 supports a lower end portion of a movable portion 75 of an air cylinder 24. The air cylinder 24 is provided with an air inlet (not shown in the drawings). An intake and exhaust hose (not shown in the drawings) is connected to the air inlet of the air cylinder 24. The cloth bonding apparatus 1 controls intake and exhaust of compressed air to the air inlet. The position of a piston (not shown in the drawings) provided in a main body of the air cylinder 24 moves in accordance with the intake and exhaust control. The movable portion 75 is connected to the piston. When the piston moves, the movable portion 75 moves in the front-rear direction. In accordance with the movement in the front-rear direction of the movable portion 75, the support portion 16 swings in the front-rear direction around the shaft portion 45 which serves as a central axis. In accordance with the swinging movement of the support portion 16, the nozzle 17 moves between a position (a use position) in which a cloth bonding operation is performed and a position (a maintenance position) in which maintenance is performed. The nozzle 17 has a cylindrical shape and is provided with a discharge opening (not shown in the drawings) that discharges the adhesive to the lower side. When the operator performs a cloth bonding operation, the discharge opening faces the bed 11. The gear pump 124 supplies the adhesive to the nozzle 17 via the supply passage 82 provided inside the support portion 16. The nozzle 17 discharges the adhesive onto the cloth from the discharge opening. The adhesive attaches to the surface of the cloth that is positioned below the nozzle 17. A valve opening/closing cylinder 49 is provided on the front side of the support portion 16. The valve opening/closing cylinder 49 opens and closes a valve 55 (refer to FIG. 6) used to shut off the supply passage 82 (refer to FIG. 6). A CPU 200 (refer to FIG. 12) provided in the control box 3 controls operation of the valve opening/closing cylinder 49.

The storage chamber 18 has a substantially cubic shape. The storage chamber 18 extends upward from a rear side portion of the pump casing 14 on the left side of the arm 13. The storage chamber 18 is provided with a main body 46, a lid 47 and a lid shaft 48. The main body 46 has a bottomed tubular shape, of which an upper portion is open. The lid 47 covers the upper portion opening of the main body 46. The main body 46 has an upper end that is provided with the lid shaft 48. The lid shaft 48 supports the lid 47 such that the lid 47 can be opened and closed. The storage chamber 18 stores a thermal melting adhesive (not shown in the drawings) in the main body 46, and supplies the stored adhesive to the nozzle 17 via the gear pump 124 as necessary. The thermal melting adhesive liquefies when it is heated to a predetermined temperature, and it solidifies at a temperature lower than the predetermined temperature. The beam portion 19 is provided with a main body 51, a cylinder support portion 53 and a column portion 52. The main body 51 extends in the horizontal direction to the left from a left rear end portion of the arm 13. The cylinder support portion 53 is plate-shaped and extends in the horizontal direction toward the front from a left end portion of the main body 51. The column portion 52 extends diagonally downward toward the front from the main body 51, at an angle of approximately 45 degrees with respect to the horizontal plane. A lower end portion of the column portion 52 is separated from the bed 11.

A main body of an air cylinder 21 is provided on a front end portion of the cylinder support portion 53. The air cylinder 21 is provided with an air inlet (not shown in the drawings). An intake and exhaust hose (not shown in the drawings) is connected to the air inlet of the air cylinder 21. The cloth bonding apparatus 1 controls intake and exhaust of compressed air to the air inlet. The position of a piston (not shown in the drawings) provided in the main body of the air cylinder 21 moves in accordance with the intake and exhaust control. A movable portion 15 is connected to the piston. When the piston moves, the movable portion 15 moves in the up-down direction. A shaft portion 62 that extends in the left-right direction is provided on the left side of a lower end portion of the column portion 52. The shaft portion 62 supports a rear end portion of a roller holding portion 20. The roller holding portion 20 swings around the shaft portion 62 such that a front end portion of the roller holding portion 20 moves in the up-down direction. The main body 51 includes the air cylinder 24 on the right side of the cylinder support portion 53. The air cylinder 24 switches a position of the support portion 16.

The front end portion of the roller holding portion 20 rotatably supports a cylindrically shaped first roller 22. The first roller 22 is located in the vicinity of the rear side of the nozzle 17 extending from the support portion 16. A shaft support portion 33 is provided on an upper surface of the roller holding portion 20, at a position slightly to the front of the center of the roller holding portion 20. The shaft support portion 33 is connected to a lower end portion of the movable portion 15. The bed 11 is provided with a hole portion 26 that extends from a portion of the bed 11 below the first roller 22 to a portion of the bed 11 below the nozzle 17. A portion of a belt 27 provided inside the bed 11 slightly protrudes upward from the hole portion 26. The belt 27 moves from the front to the rear of the bonding device 2 during a bonding operation, and transports the cloth from the front to the rear.

A gap between the first roller 22 and the belt 27 changes in accordance with the movement of the piston of the air cylinder 21. As shown in FIG. 4, the roller holding portion 20 is inclined diagonally downward toward the front in a state in which the movable portion 15 has moved downward. As a result, the gap between the first roller 22 and the belt 27 is small. The roller holding portion 20 is substantially horizontal in a state in which the movable portion 15 has moved upward. As a result, the gap between the first roller 22 and the belt 27 is large.

An internal configuration of the bonding device 2 will be explained with reference to FIG. 5. The bonding device 2 is provided with a first motor 91, a second motor 92, a third motor 93, a lower transport portion 37 and the like in its interior. The first motor 91 drives the gear pump 124 by transmitting a rotational driving force to the gear pump 124 via a rotating shaft 121. The gear pump 124 is provided with a drive gear 122 and a driven gear 123. The drive gear 122 is fixed to a left end portion of the rotating shaft 121. The drive gear 122 rotates along with the rotating shaft 121. The driven gear 123 meshes with the drive gear 122. The first motor 91 is positioned inside the arm 13 and on the right side of a portion where the pump casing 14 is connected to the arm 13. The rotating shaft 121 extends, inside the pump casing 14, to the left from a rotating shaft of the first motor 91. The drive gear 122 and the driven gear 123 supply an appropriate amount of the adhesive to the nozzle 17.

The second motor 92 drives the first roller 22 by transmitting a rotational driving force to the first roller 22 via rotating shafts 126 to 128 and belts 129 and 130. The second motor 92 is positioned inside the arm 13 and on the right side of a portion where the beam portion 19 is connected to the arm 13. The rotating shaft 126 extends to the left from a rotating shaft of the second motor 92, and penetrates inside the main body 51. A left end portion of the rotating shaft 126 is positioned inside the column portion 52, and supports a pulley. A right end portion of the rotating shaft 127 extends into the lower end portion of the column portion 52. A left end portion of the rotating shaft 127 extends into the rear end portion of the roller holding portion 20. The right end portion and the left end portion of the rotating shaft 127 respectively support pulleys. The rotating shaft 128 is a rotating shaft of the first roller 22. A left end portion of the rotating shaft 128 extends into the front end portion of the roller holding portion 20, and supports a pulley. A right end portion of the rotating shaft 128 projects from the front end portion of the roller holding portion 20, and supports the first roller 22. The belt 129 is stretched between the pulley of the left end portion of the rotating shaft 126 and the pulley of the right end portion of the rotating shaft 127 inside the column portion 52. The belt 130 is stretched between the pulley of the left end portion of the rotating shaft 127 and the pulley of the left end portion of the rotating shaft 128 inside the roller holding portion 20. The first roller 22 rotates due to the rotation of the second motor 92.

The third motor 93 is provided inside the bed 11, on the right side of the bed 11. The third motor 93 rotates a first pulley 25 by transmitting a rotational driving force to the first pulley 25 via a rotating shaft 141 and a belt 142. The rotating shaft 141 is a rotating shaft of the first pulley 25. The rotating shaft 141 extends to the right inside the bed 11. A right end portion of the rotating shaft 141 supports a pulley. A support bed 4 is provided inside the bed 11. The support bed 4 rotatably supports the rotating shaft 141. The belt 142 is stretched between a pulley of a rotating shaft of the third motor 93 and a pulley of the right end portion of the rotating shaft 141 inside the bed 11. The first pulley 25 rotates due to the rotation of the third motor 93.

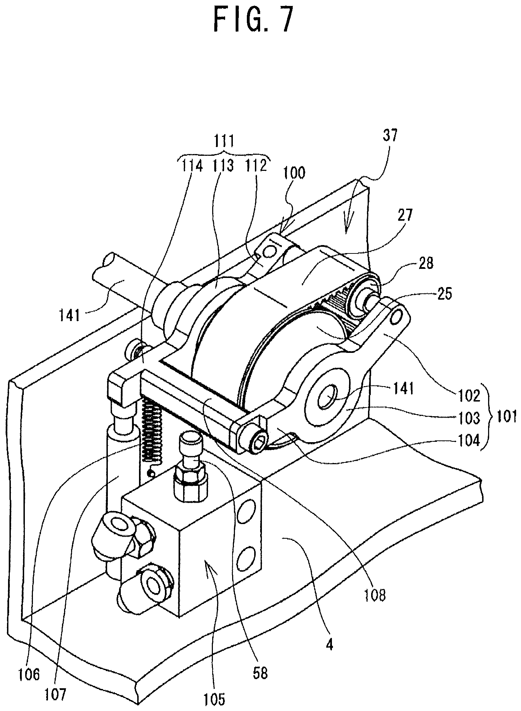

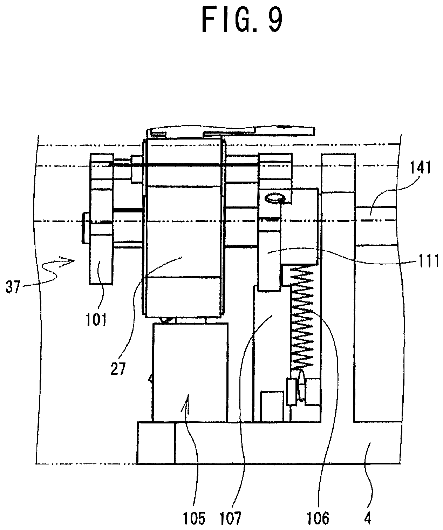

The lower transport portion 37 will be explained with reference to FIG. 7 to FIG. 9. The upper right side, the lower left side, the upper left side and the lower right side of FIG. 7 respectively correspond to the front side, the rear side, the right side and the left side of the lower transport portion 37. The lower transport portion 37 is provided with the first pulley 25, a second pulley 28, a pulley support portion 100, the belt 27 and a spring 106. The pulley support portion 100 rotatably supports the second pulley 28. The belt 27 is a toothed belt. The first pulley 25 and the second pulley 28 have a cylindrical shape. The first pulley 25 is provided below the first roller 22. The second pulley 28 is provided diagonally below and forward of the nozzle 17.

As shown in FIG. 7, the pulley support portion 100 is provided with a left side plate portion 101, a right side plate portion 111 and a bridge portion 108. The plate-shaped left side plate portion 101 is located on the left side of the first pulley 25 and the second pulley 28. The plate-shaped right side plate portion 111 is located on the right side of the first pulley 25 and the second pulley 28. The bridge portion 108 forms a connection between the left side plate portion 101 and the right side plate portion 111.

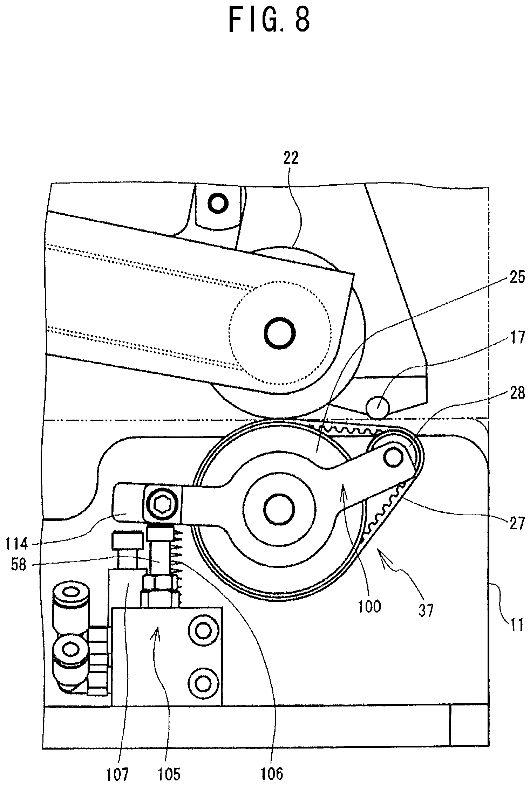

The left side plate portion 101 is provided with a support convex portion 102, a ring portion 103 and a spring convex portion 104. The ring portion 103 having a circular plate shape is positioned in parallel with a left end face of the first pulley 25. The center of the ring portion 103 is located at the same position as the rotation axis center of the first pulley 25. A hole is provided in a central portion of the ring portion 103. The rotating shaft 141 of the first pulley 25 passes through the hole. The spring convex portion 104 extends to the rear from the ring portion 103 in the horizontal direction. The support convex portion 102 extends diagonally upward to the front from the ring portion 103, in a direction of approximately 45 degrees. The right side plate portion 111 has substantially the same shape as the left side plate portion 101. The right side plate portion 111 is provided with a support convex portion 112, a ring portion 113 and a spring convex portion 114. A length of the spring convex portion 114 in the front-rear direction is slightly longer than a length of the spring convex portion 104 in the front-rear direction. A hole is provided in a central portion of the ring portion 113. The rotating shaft 141 of the first pulley 25 passes through the hole. The support convex portion 102 and the support convex portion 112 respectively have holes in their front end portions. A rotating shaft of the second pulley 28 passes through the holes. The support convex portion 102 and the support convex portion 112 rotatably support the second pulley 28. The bridge portion 108 extends to the right from the rear end of the spring convex portion 104, and connects to the spring convex portion 114. As shown in FIG. 7 and FIG. 8, the belt 27 is stretched between the first pulley 25 and the second pulley 28. The belt 27 rotates in accordance with rotation of the first pulley 25. An air cylinder 105 is provided below the bridge portion 108. The air cylinder 105 is provided with an air inlet (not shown in the drawings). An intake and exhaust hose (not shown in the drawings) is connected to the air inlet of the air cylinder 105. The cloth bonding apparatus 1 controls intake and exhaust of compressed air to the air inlet. The position of a piston (not shown in the drawings) provided in the air cylinder 105 moves in accordance with the intake and exhaust control. A movable portion 58 is connected to the piston. When the piston moves, the movable portion 58 moves in the up-down direction. The movable portion 58 can come into contact with the bridge portion 108.

A rod-shaped stopper 107 is provided below the spring convex portion 114. The stopper 107 extends upward from the support bed 4. A stopper screw is screwed into the upper end of the stopper 107. A length of the stopper 107 in the up-down direction can be changed by changing an amount of screwing of the stopper screw. The stopper 107 can come into contact with a rear end portion of the spring convex portion 114. As shown in FIG. 7, the spring 106 is provided in front of the stopper 107. A lower end portion of the spring 106 is connected to the support bed 4. An upper end portion of the spring 106 is connected to a substantially central portion of the spring convex portion 114 in the front-rear direction, on a right side surface of the spring convex portion 114. The spring 106 pulls down the spring convex portion 114. The pulley support portion 100 swings around the rotating shaft 141. The support convex portion 102 and the support convex portion 112 are raised by an urging force of the spring 106. Thus, the second pulley 28 moves upward.

As shown in FIG. 8, a portion of the belt 27 slightly protrudes upward from the hole portion 26 (refer to FIG. 2) of the bed 11. The movable portion 58 moves in the up-down direction and thereby adjusts an amount of swinging movement of the pulley support portion 100. The stopper 107 changes its length in the up-down direction and thereby adjusts the amount of swinging movement of the pulley support portion 100. The movable portion 58 and the stopper 107 can adjust an amount of upward movement of a front portion of the belt 27.

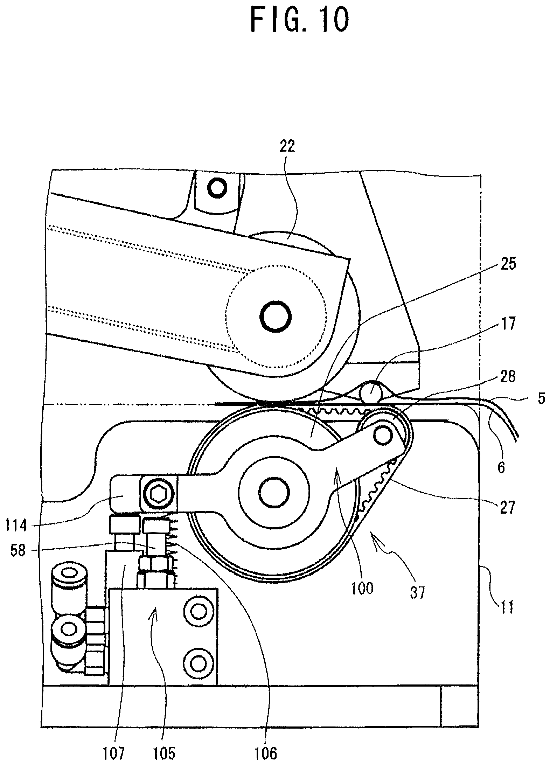

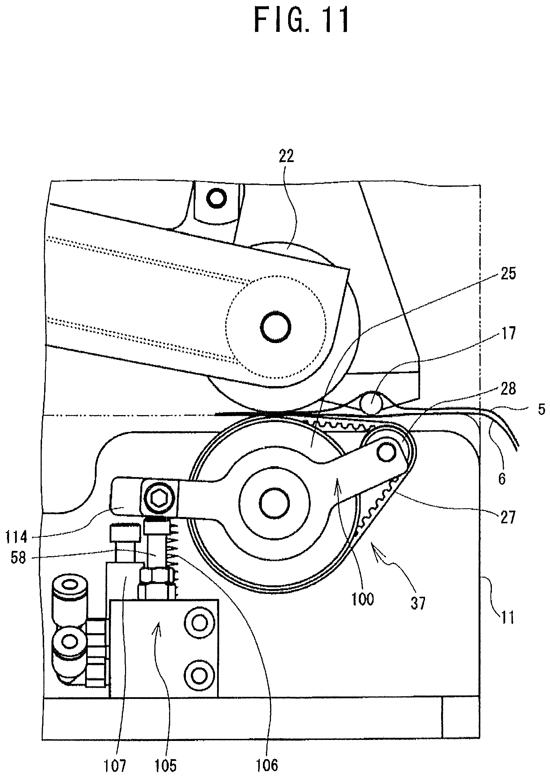

A state in the vicinity of the first roller 22 and the lower transport portion 37 will be explained with reference to FIG. 10 and FIG. 11. FIG. 10 shows a first position. FIG. 11 shows a second position. When a bonding operation is performed, the cloth bonding apparatus 1 moves the movable portion 75 (refer to FIG. 2) of the air cylinder 24 to the front and thereby moves the support portion 16 (refer to FIG. 2) to the use position. The operator places an upper cloth 5 and a lower cloth 6 on a bed 7 such that they are overlapped with each other, and disposes the nozzle 17 on a bonding portion of the lower cloth 6. The cloth bonding apparatus 1 moves the movable portion 15 (refer to FIG. 2) of the air cylinder 21 in the downward direction, and moves the movable portion 58 (refer to FIG. 10) of the air cylinder 105 in the downward direction. As a result, as shown in FIG. 10, the cloth bonding apparatus 1 is in the first position in which the belt 27 and the nozzle 17 clamp the lower cloth 6. When the operator depresses the pedal 208, the cloth bonding apparatus 1 performs driving control of the first to third motors 91 to 93. The driven first motor 91 operates the gear pump 124. The gear pump 124 supplies an appropriate amount of the adhesive to the nozzle 17. The driven second motor 92 rotates the first roller 22. The driven third motor 93 rotates the belt 27. Thus, in synchronization with the first roller 22 and the belt 27 feeding the upper cloth 5 and the lower cloth 6 on the bed 7, the adhesive is discharged between the upper cloth 5 and the lower cloth 6 from the discharge opening of the nozzle 17. When the operator stops the depression of the pedal 208, the pedal 208 returns to an original position. The cloth bonding apparatus 1 stops the first to third motors 91 to 93. As a result, the feeding of the upper cloth 5 and the lower cloth 6 is stopped. The discharge of the adhesive is also stopped. When an execution setting flag, which will be described later, is "1" (ON), the cloth bonding apparatus 1 performs reverse operations of the first roller 22 and the belt 27. The second motor 29 rotates the first roller 22 in a reverse direction. The third motor 93 rotates the belt 27 in a reverse direction. Thus, the first roller 22 and the belt 27 feed the upper cloth 5 and the lower cloth 6 in the reverse direction on the bed 7. When the bonding operation is ended, the cloth bonding apparatus 1 moves the movable portion 15 (refer to FIG. 2) of the air cylinder 21 in the upward direction, and moves the movable portion 58 (refer to FIG. 10) of the air cylinder 105 in the upward direction. As a result, as shown in FIG. 11, the cloth bonding apparatus 1 is in the second position in which the belt 27 and the nozzle 17 are separated from each other. Further, the cloth bonding apparatus 1 moves the movable portion 75 (refer to FIG. 2) of the air cylinder 24 to the rear and thereby moves the support portion 16 (refer to FIG. 2) to the maintenance position.

An electrical configuration of the cloth bonding apparatus 1 will be explained with reference to FIG. 12. The cloth bonding apparatus 1 is provided with the CPU 200, a ROM 201, a RAM 202 and a storage device 203. The CPU 200 performs reception processing and control processing. The reception processing is processing that receives input information from the keys 209, the pedal 208 and the like. The control processing is processing that controls the motors and the like. The ROM 201 stores programs executed by the CPU 200 and various initial setting parameters etc. The RAM 202 temporarily stores a timer value, a counter value, flags and the like. The storage device 203 is a non-volatile memory (for example, a hard disk, a flash memory or the like) that stores various setting information, flags and the like input by the operator. The CPU 200 is electrically connected to each of the ROM 201, the RAM 202 and the storage device 203. The CPU 200 can access storage areas of the ROM 201, the RAM 202 and the storage device 203. The pedal 208 is electrically connected to the CPU 200. The operator uses the pedal 208 when adjusting the transport speed of the cloth. The CPU 200 can recognize an amount of depression of the pedal 208. The CPU 200 determines respective rotational speeds of the drive gear 122, the first roller 22 and the first pulley 25, in proportion to the recognized amount of depression of the pedal 208. The keys 209 are electrically connected to the CPU 200. The operator uses the keys 209 when performing various operation settings. The CPU 200 can recognize a state of depression of the keys 209. The CPU 200 stores information of the various operation settings in the storage device 203, based on the recognized state of depression of the keys 209. A display driver 205 is electrically connected to the CPU 200. The display driver 205 is electrically connected to the liquid crystal display portion 207. The CPU 200 displays various types of information on the liquid crystal display portion 207 via the display driver 205. A motor driver 206 is electrically connected to the CPU 200. The first to third motors 91 to 93 are each electrically connected to the motor driver 206. The CPU 200 controls the first to third motors 91 to 93 via the motor driver 206. Thus, the CPU 200 rotates the drive gear 122, the first roller 22 and the first pulley 25 at the respective rotational speeds determined based on the amount of depression of the pedal 208. An air driver 204 is electrically connected to the CPU 200. The air driver 204 is electrically connected to the air cylinders 21, 24 and 105 and to the valve opening/closing cylinder 49. The CPU 200 controls a pressure of air fed into each of the air inlets of the air cylinders 21, 24 and 105 and of the valve opening/closing cylinder 49 via the air driver 204. The first roller 22 moves in the up-down direction in accordance with the movement of the air cylinder 21. The support portion 16 moves between the use position and the maintenance position in accordance with the movement of the air cylinder 24. The second pulley 28 moves in the up-down direction in accordance with the movement of the air cylinder 105. The valve 55 moves in the up-down direction in accordance with the movement of the valve opening/closing cylinder 49.

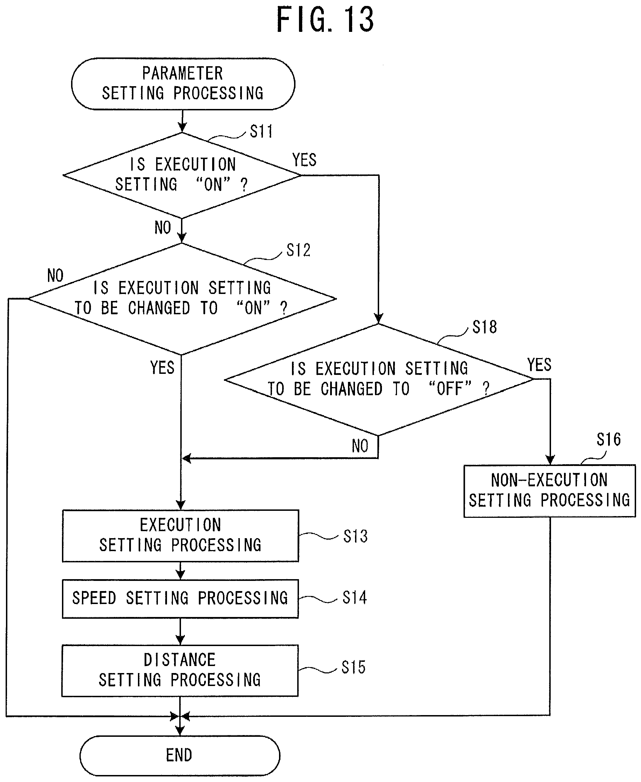

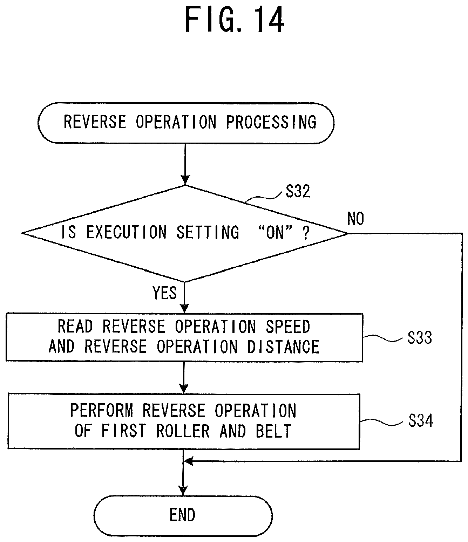

Processing related to reverse operation of the cloth bonding apparatus 1 will be explained. When a power source of the cloth bonding apparatus 1 is turned on, the CPU 200 performs processing shown in FIG. 13 and FIG. 14 based on the programs stored in the ROM 201. Parameter setting processing of the reverse operation will be explained with reference to FIG. 13. When the operator operates the keys 209 and selects the parameter setting processing of the reverse operation, the CPU 200 determines whether execution setting of the reverse operation is ON (step S11). For example, the CPU 200 makes a determination based on the execution setting flag stored in the storage device 203. When the execution setting flag is 0 (OFF), the CPU 200 determines that the execution setting is not ON (no at step S11). At this time, the CPU 200 determines whether to change the execution setting of the reverse operation to ON (step S12). For example, the CPU 200 displays on the liquid crystal display portion 207 a screen inquiring whether to change the execution setting to ON. When the operator operates the keys 209 and depresses an EXECUTE key (not shown in the drawings), the CPU 200 determines that the execution setting is to be changed to ON (yes at step S12). When the operator does not depress the EXECUTE key (not shown in the drawings) even after a predetermined time has elapsed, the CPU 200 determines that the execution setting is not to be changed to ON (no at step S12), and ends the parameter setting. The predetermined time is stored in the ROM 201 in advance. Note that a stop key may be provided and when the operator depresses the stop key, a negative determination may be made at step S12. When the CPU 200 changes the execution setting to ON (yes at step S12), the CPU 200 performs execution setting processing that changes the execution setting flag stored in the storage device 203 to 1 (ON) (step S13). After that, the CPU 200 performs speed setting processing of the reverse operation (step S14). At step S14, the CPU 200 sets a speed to return the first roller 22 and the belt 27 (a reverse operation speed to return the cloth) at a time of the reverse operation. For example, the CPU 200 displays an initial value (5.0 m/minute, for example) of the reverse operation speed on the liquid crystal display portion 207. The operator can increase or decrease and thus change the displayed reverse operation speed by operating the keys 209. The CPU 200 stores the changed reverse operation speed in the storage device 203. A changeable range of the reverse operation speed is between 0.5 m/minute and 10.0 m/minute. After that, the CPU 200 performs distance setting processing of the reverse operation (step S15). At step S15, the CPU 200 sets a distance to return the first roller 22 and the belt 27 (a reverse operation distance to return the cloth) at the time of the reverse operation. For example, the CPU 200 displays an initial value (1.5 mm, for example) of the reverse operation distance on the liquid crystal display portion 207. The operator can increase or decrease and thus change the displayed reverse operation distance by operating the keys 209. The CPU 200 stores the changed reverse operation distance in the storage device 203. A changeable range of the reverse operation distance is between 0.5 mm and 5.0 mm. When the distance setting processing ends, the parameter setting processing ends. When the execution setting flag is 1 (ON), the CPU 200 determines that the execution setting is ON (yes at step S11). At this time, the CPU 200 determines whether to change the execution setting of the reverse operation to OFF (step S18). For example, the CPU 200 displays on the liquid crystal display portion 207 a screen inquiring whether to change the execution setting to OFF. When the operator operates the keys 209 and depresses an EXECUTE key (not shown in the drawings), the CPU 200 determines that the execution setting is to be changed to OFF (yes at step S18). When the operator does not depress the EXECUTE key (not shown in the drawings) even after the predetermined time has elapsed, the CPU 200 determines that the execution setting is not to be changed to OFF (no at step S18). When the CPU 200 changes the execution setting to OFF (yes at step S18), the CPU 200 performs non-execution setting processing that changes the execution setting flag stored in the storage device 203 to 0 (OFF) (step S16), and ends the parameter setting. When the CPU 200 does not change the execution setting to OFF (no at step S18), the CPU 200 performs the execution setting processing (step S13), the speed setting processing (step S14) and the distance setting processing (step S15), and ends the parameter setting processing.

The reverse operation processing will be explained with reference to FIG. 14. The reverse operation processing is processing that is performed when the operator releases the pedal 208. When the operator releases the pedal 208, it is indicated that the operator has issued a command to stop the bonding operation. The CPU 200 determines whether the execution setting of the reverse operation is ON (step S32). When the execution setting flag stored in the storage device 203 is 1 (ON) (yes at step S32), the CPU 200 reads, from the storage device 203, the reverse operation speed and the reverse operation distance set by the parameter setting processing (step S33). The CPU 200 controls the motor driver 206 to cause the second motor 92 and the third motor 93 to rotate in reverse, and performs the reverse operation of the first roller 22 and the belt 27 (step S34). The CPU returns the first roller 22 and the belt 27 by the reverse operation distance read at step S33, at the reverse operation speed read at step S33. After performing step S34, or when the execution setting flag stored in the storage device 203 is 0 (OFF) (no at step S32), the processing ends.

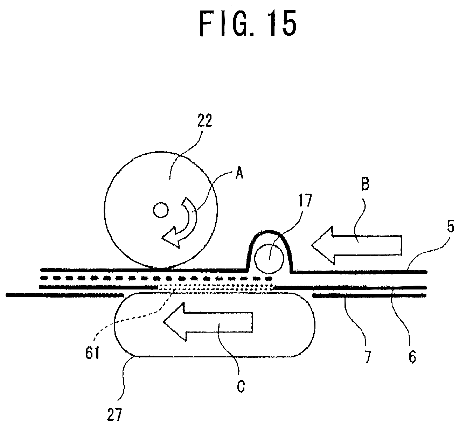

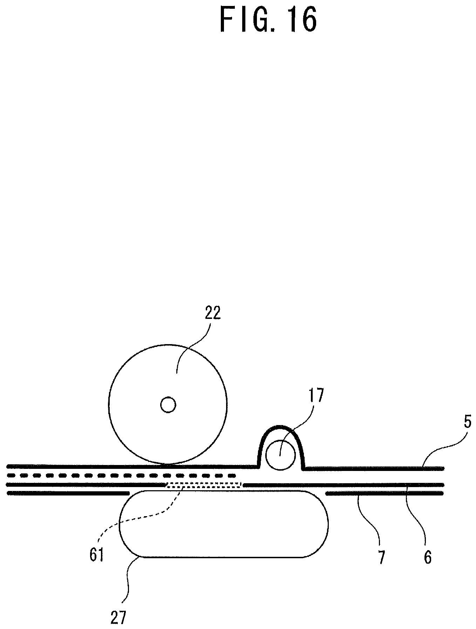

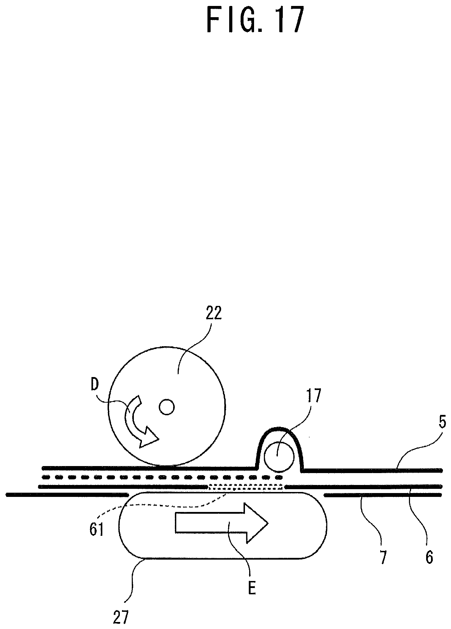

Operation states of the first roller 22 and the belt 27 when the reverse operation is not performed (FIG. 16) and when the reverse operation is performed (FIG. 17) will be explained with reference to FIG. 15 to FIG. 17. During the bonding operation in which the adhesive is applied to the cloth for bonding as shown in FIG. 15, the first roller 22 rotates in a clockwise direction (in a direction of an arrow A) as viewed from the left side. The first roller 22 feeds the upper cloth 5, which has passed over the upper side of the nozzle 17, in a direction of an arrow B. The belt 27 rotates in a counterclockwise direction as viewed from the left side, and feeds the lower cloth 6 on the bed 7 in a direction of an arrow C. The direction of the arrow B and the direction of the arrow C are the same direction. Tension is generated in a dotted line portion 61 of the lower cloth 6. Next, the operator releases the pedal 208 and thereby issues, to the cloth bonding apparatus 1, the command to stop the bonding operation. When the reverse operation is not performed, the first roller 22 and the belt 27 are stopped as shown in FIG. 16. The dotted line portion 61 of the lower cloth 6 contracts as a result of the tension and moves from the lower side of the nozzle 17 toward a downstream side (in the direction of the arrows B and C) in a feed direction of the lower cloth 6. As a result, a non-applied portion on which the adhesive is not applied is likely to be generated from the position of the nozzle 17 toward the downstream side in the feed direction of the upper cloth 5 and the lower cloth 6. When the reverse operation is performed, if the operator releases the pedal 208 (namely, if the operator issues to the cloth bonding apparatus 1 the command to stop the bonding operation), the first roller 22 rotates in reverse in a counterclockwise direction (in a direction of an arrow D) as viewed from the left side and the belt 27 rotates in the clockwise direction as viewed from the left side, as shown in FIG. 17. The upper cloth 5 and the lower cloth 6 return to an upstream side (in a direction of an arrow E) in the feed direction on the bed 7 by the set predetermined distance (the reverse operation distance) and at the set predetermined speed (the reverse operation speed). The direction of an arrow E is a direction opposite to the direction of the arrows B and C. The tension generated in the dotted line portion 61 of the lower cloth 6 disappears. Thus, the cloth bonding apparatus 1 can inhibit the upper cloth 5 and the lower cloth 6 from moving due to the effect of the tension. For this reason, with the cloth bonding apparatus 1, the non-applied portion on which the adhesive is not applied is unlikely to be generated from the lower side of the nozzle 17 toward the downstream side in the feed direction of the cloth. The operator can set the reverse operation speed and distance in accordance with the thickness and properties of the cloth. The operator can set whether to perform the reverse operation.

The nozzle 17 is an example of a nozzle of the present invention. The lower cloth 6 is an example of a first cloth of the present invention. The upper cloth 5 is an example of a second cloth of the present invention. The belt 27 is an example of a feed portion of the present invention. The first roller 22 is an example of a pressing portion of the present invention. The CPU 200, the motor driver 206 and the first motor 91 are an example of a discharge control portion of the present invention. The CPU 200, the motor driver 206, the second motor 92 and the third motor 93 are an example of a drive control portion of the present invention. The CPU 200 that performs the processing at step S14 in FIG. 13 is an example of a speed setting portion of the present invention. The CPU 200 that performs the processing at step S15 in FIG. 13 is an example of a distance setting portion of the present invention. The CPU 200 that performs the processing at step S13 and step S16 in FIG. 13 is an example of a mode setting portion of the present invention.

The present invention is not limited to the above-described embodiment and various modifications are possible. For example, the above-described numerical values of the speed and the distance that are set for the reverse operation are merely an example. The speed and the distance that are set for the reverse operation may be set as appropriate in accordance with the thickness and the type of the cloth.

## Claims

1. A cloth bonding apparatus (1) comprising:
a nozzle (17) including a discharge opening through which an adhesive is dischargeable between a first cloth (6) and a second cloth (5) arranged to face each other;
a feed portion (27) that is adapted to feed the first cloth in a first direction with respect to the nozzle;
a discharge control portion (200, 206, 92, 93) that starts and stops processing that discharges the adhesive from the discharge opening; and
a pressing portion (22) that is located on the first direction side with respect to the nozzle, that is adapted to press the first cloth and the second cloth to which the adhesive discharged from the discharge opening is attached, and that is adapted to feed the second cloth in the first direction,
**characterized by**
a drive control portion (200) that, when the discharge control portion stops the processing that discharges the adhesive, causes the feed portion and the pressing portion, to perform a reverse operation that returns the first cloth and the second cloth by a predetermined distance in a second direction that is opposite to the first direction.

2. The cloth bonding apparatus according to claim 1, wherein
the drive control portion causes the feed portion and the pressing portion to feed the first cloth and the second cloth in the second direction at a predetermined speed.

3. The cloth bonding apparatus according to claim 1 or 2, further comprising:
a distance setting portion (200) that sets the predetermined distance.

4. The cloth bonding apparatus according to claim 2, further comprising:
a speed setting portion (200) that sets the predetermined speed.

5. The cloth bonding apparatus according to any one of claims 1 to 4, further comprising:
a mode setting portion (200) that sets whether to perform the reverse operation.

## Patentansprüche

1. Vorrichtung zum Verbinden von Stoff (1), umfassend:
eine Düse (17) einschließend eine Austrittsöffnung, durch die ein Klebstoff zwischen einem ersten Stoff (6) und einem zweiten Stoff (5), so angeordnet, dass sie einander zugewandt sind, austreten kann;
einen Zuführungsabschnitt (27), der so angepasst ist, dass er den ersten Stoff in einer ersten Richtung in Bezug auf die Düse zuführt;
einen Austrittskontrollabschnitt (200, 206, 92, 93), der die Verarbeitung beginnt und stoppt, der den Klebstoff aus der Austrittsöffnung austrägt; und
einen Pressabschnitt (22), der auf der ersten Richtungsseite in Bezug auf die Düse gelegen ist, der so angepasst ist, den ersten Stoff und den zweiten Stoff, an den der aus der Austrittsöffnung austretende Klebstoff befestigt ist, zu pressen, und der angepasst ist, den zweiten Stoff in der ersten Richtung zuzuführen,
**gekennzeichnet durch**
einen Antriebssteuerabschnitt (200), der, wenn der Austrittskontrollabschnitt die Verarbeitung, die den Klebstoff austrägt, stoppt, bewirkt, dass der Zuführungsabschnitt und der Pressabschnitt einen Umkehrvorgang ausführen, der den ersten Stoff und den zweiten Stoff um einen vorbestimmten Abstand in eine zweite Richtung zurückführt, die der ersten Richtung entgegengesetzt ist.

2. Vorrichtung zum Verbinden von Stoff nach Anspruch 1, wobei
der Antriebssteuerabschnitt bewirkt, dass der Zuführungsabschnitt und der Pressabschnitt den ersten Stoff und den zweiten Stoff in der zweiten Richtung mit einer vorbestimmten Geschwindigkeit zuführen.

3. Vorrichtung zum Verbinden von Stoff nach Anspruch 1 oder 2, ferner umfassend:
einen Abstandseinstellabschnitt (200), der den vorbestimmten Abstand einstellt.

4. Vorrichtung zum Verbinden von Stoff nach Anspruch 2, ferner umfassend:
einen Geschwindigkeitseinstellbereich (200), der die vorbestimmte Geschwindigkeit einstellt.

5. Vorrichtung zum Verbinden von Stoff nach irgendeinem der Ansprüche 1 bis 4, ferner umfassend:
einen Modus-Einstellbereich (200), der festlegt, ob der Umkehrvorgang ausgeführt werden soll.

## Revendications

1. Appareil de liaison de tissus (1) comprenant :
un ajutage (17) incluant une ouverture d'évacuation à travers laquelle un adhésif peut être évacué entre un premier tissu (6) et un second tissu (5) agencés pour se faire mutuellement face ;
une portion d'acheminement (27) qui est adaptée pour acheminer le premier tissu dans une première direction par rapport à l'ajutage ;
une portion de commande d'évacuation (200, 206, 92, 93) qui démarre et arrête un traitement qui évacue l'adhésif depuis l'ouverture d'évacuation ; et
une portion de pressage (22) qui se situe sur le côté première direction par rapport à l'ajutage, qui est adaptée pour presser le premier tissu et le second tissu auxquels est attaché l'adhésif évacué depuis l'ouverture d'évacuation, et qui est adaptée pour acheminer le second tissu dans la première direction,
**caractérisé par**
une portion de commande d'entraînement (200) qui, lorsque la portion de commande d'évacuation arrête le traitement qui évacue l'adhésif, amène la portion d'acheminement et la portion de pressage à effectuer une opération d'inversion qui retourne le premier tissu et le second tissu d'une distance prédéterminée dans une seconde direction qui est opposée à la première direction.

2. Appareil de liaison de tissus selon la revendication 1, dans lequel
la portion de commande d'entraînement amène la portion d'acheminement et la portion de pressage à acheminer le premier tissu et le second tissu dans la seconde direction à une vitesse prédéterminée.

3. Appareil de liaison de tissus selon la revendication 1 ou 2, comprenant en outre :
une portion de réglage de distance (200) qui règle la distance prédéterminée.

4. Appareil de liaison de tissus selon la revendication 2, comprenant en outre :
une portion de réglage de vitesse (200) qui règle la vitesse prédéterminée.

5. Appareil de liaison de tissus selon l'une quelconque des revendications 1 à 4, comprenant en outre :
une portion de réglage de mode (200) qui règle s'il faut effectuer l'opération d'inversion.
